# EUROPÄISCHE PATENTSCHRIFT

(11) **EP 1 334 295 B1**
(45) Veröffentlichungstag und Bekanntmachung des Hinweises auf die Patenterteilung: **19.03.2008**
(21) Anmeldenummer: 01992848.0
(22) Anmeldetag: 10.10.2001
(51) Int. Cl.: F16H 48/08

(54) **DIFFERENTIAL FÜR DEN ACHSANTRIEB EINES KRAFTFAHRZEUGES**
DIFFERENTIAL FOR THE FINAL DRIVE OF A MOTOR VEHICLE
DIFFERENTIEL DESTINE A L'ENTRAINEMENT D'AXE D'UN VEHICULE

(30) Priorität: 02.11.2000 DE 10054237
(43) Veröffentlichungstag der Anmeldung: 13.08.2003
(73) Patentinhaber: Dr. Ing. H.C.F. Porsche Aktiengesellschaft, 70435 Stuttgart (DE)
(72) Erfinder: PATZER, Jürgen, 73252 Lenningen (DE); MEFFERT, Peter, 75233 Tiefenbronn (DE); SCHWARZ, Heinrich, 75233 Tiefenbronn (DE)
(86) Internationale Anmeldenummer: PCT/EP2001/011693
(87) Internationale Veröffentlichungsnummer: WO 2002/036991

(56) Entgegenhaltungen:
- BE-A- 384 323
- CH-A- 94 132
- GB-A- 922 004
- US-A- 1 421 834
- US-A- 3 427 900
- US-A- 3 779 102
- US-A- 4 635 505
- US-A- 5 323 666

## Beschreibung

Die Erfindung betrifft ein Differential für ein Kraftfahrzeug gemäß dem Oberbegriff des Patentanspruchs 1.

Aus der DE 43 13 322 A1 ist es beispielsweise bekannt, die Achswellen-Kegelräder in einem Käfig zu lagern, damit die in Richtung der Achsantriebswellen wirkenden Kräfte aufgenommen werden können. Damit kann das Ausgleichsgehäuse von diesen Kräften freigestellt und dementsprechend kleiner dimensioniert werden.

Aus der US 4 635 505 ist ein Differential mit den Merkmalen des Oberbegriffes des Anspruches 1 bekannt.

Aufgabe der Erfindung ist es, ein verbessertes Differential für den Achsantrieb eines Kraftfahrzeuges zu schaffen, das sich trotz seiner Leichtbauweise durch einen geräuscharmen und verschleissarmen Betrieb auszeichnet.

Die Lösung dieser Aufgabe wird durch die Merkmale des Anspruchs 1 gelöst. Über die Zugstange wird der durch die Achswellenkegelräder erzeugte Axialkraftfluss aufgenommen bzw. geschlossen. Ein Differentialkäfig ist daher nicht mehr erforderlich. Durch die Zugstange werden die Gelenkflansche auch in radialer Richtung verbunden, so dass die damit verbundene präzisere Lagerführung zu einem geräuscharmen Betrieb des Achsdifferentials führt.

Vorteilhafte Ausgestaltungen und Weiterbildungen der Erfindung sind in den Unteransprüchen aufgeführt.

In einer ersten vorteilhaften Ausführungsform ist die Zugstange einstückig mit einem ersten Gelenkflansch verbunden. Dadurch, dass der zweite Gelenkflansch über Radiallager auf der Zugstange geführt ist, wird eine mögliche Kippbewegung der beiden Gelenkflansche weiter reduziert. Auch diese Maßnahme trägt zur Geräuschreduzierung und einem verschleissfreien Betrieb des Achsdifferentials bei.

Ein am Ende des zweiten Gelenkflansches angeordnetes Axiallager unterstützt eine reibungs- und geräuscharme Relativbewegung zwischen dem Gelenkflansch und der Zugstange bei Kurvenfahrten des Kraftfahrzeuges.

In einer zweiten vorteilhaften Ausführungsform sind beide Gelenkflansche mit einer zylindrischen Öffnung versehen, durch die die Zugstange hindurchgeführt ist, wobei zur Aufnahme der auf Grund der kegligen Verzahnung erzeugten Axialkraft jeweils am Ende der Gelenkflansche auf der Zugstange ein Sicherungselement angeordnet ist.

Die Erfindung wird nachfolgend anhand einer schematischen Zeichnung beispielhaft näher erläutert.

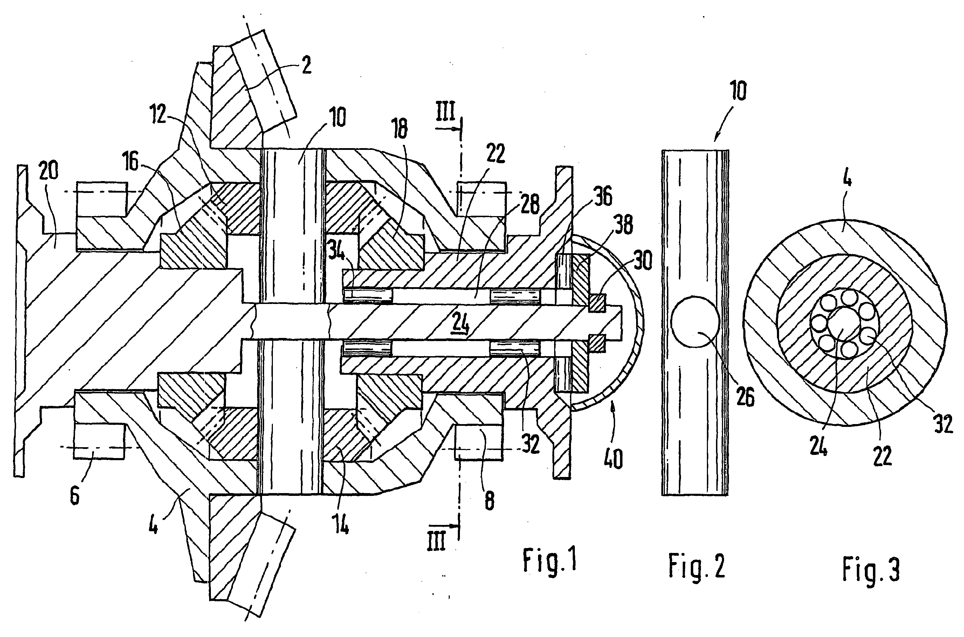

Es zeigen
- Fig. 1: eine schematische Gesamtdarstellung eines Achsdifferentials in einer ersten Ausführungsform,
- Fig. 2: einen Achsbolzen,
- Fig. 3: einen Schnitt entlang der Linie III-III in Fig. 1,
- Fig. 4: den Axialkraftfluss der Achswellenkegelräder und
- Fig. 5: ein Achsdifferential in einer zweiten Ausführungsform.

### Beschreibung der Ausführungsbeispiele.

Ein Differential für den Achsantrieb eines Kraftfahrzeuges weist ein als Tellerrad 2 ausgebildetes Antriebsrad auf, das ein Ausgleichsgehäuse 4 trägt. Das Ausgleichsgehäuse 4 sowie ein das Tellerrad 2 antreibendes Ritzel (nicht dargestellt) sind in einem Getriebegehäuse (nicht dargestellt) gelagert (siehe Lager 6 und 8).

Im Ausgleichsgehäuse ist ein Achsbolzen 10 angeordnet, auf dem zwei Ausgleichskegelräder 12 und 14 drehbar gelagert sind. Die beiden Ausgleichskegelräder 12, 14 stehen mit zwei Achswellenkegelrädern 16 und 18 kämmend im Eingriff. Die Achswellenkegelräder 16, 18 wiederum sind jeweils mit einem Gelenkflansch 20 und 22 drehfest verbunden, an denen nicht dargestellte Achsantriebswellen, die mit den Fahrzeugrädern verbunden sind, befestigt sind.

Der Gelenkflansch 20, im folgenden als erster Gelenkflansch bezeichnet, weist in seiner axialen Verlängerung eine Zugstange 24 auf, die durch eine im Achsbolzen 10 angeordnete Öffnung 26 und eine im Gelenkflansch 22, im folgenden als zweiter Gelenkflansch bezeichnet, angeordnete zylindrische Öffnung 28 hindurchgeführt ist. Die den zweiten Gelenkflansch 22 aufnehmende Zugstange ist an ihrem Ende mit einem axialen Sicherungselement 30 versehen, das als Mutter, Sprengring, Splint oder ähnlichem ausgebildet ist. Der zweite Gelenkflansch 22 ist mit Hilfe von zwei Radiallagern 32 und 34, die als Gleit- oder Wälzlager ausgeführt sind, sowie einem Axiallager 36 drehbar auf der Zugstange 24 gelagert. Das am Ende des zweiten Gelenkflansches 22 angeordnete Axiallager 36, das ebenfalls als Gleit- oder Wälzlager ausgeführt ist, wird durch eine dem Durchmesser des Axiallagers 36 angepasste Anlaufscheibe 38 axial abgestützt. Die Anlaufscheibe 38 wiederum wird axial durch das Sicherungselement 30 abgestützt. Das mit dem Axiallager 36 versehene Ende der Zugstange 24 ist weiterhin durch eine Schutzkappe 40 abgedichtet.

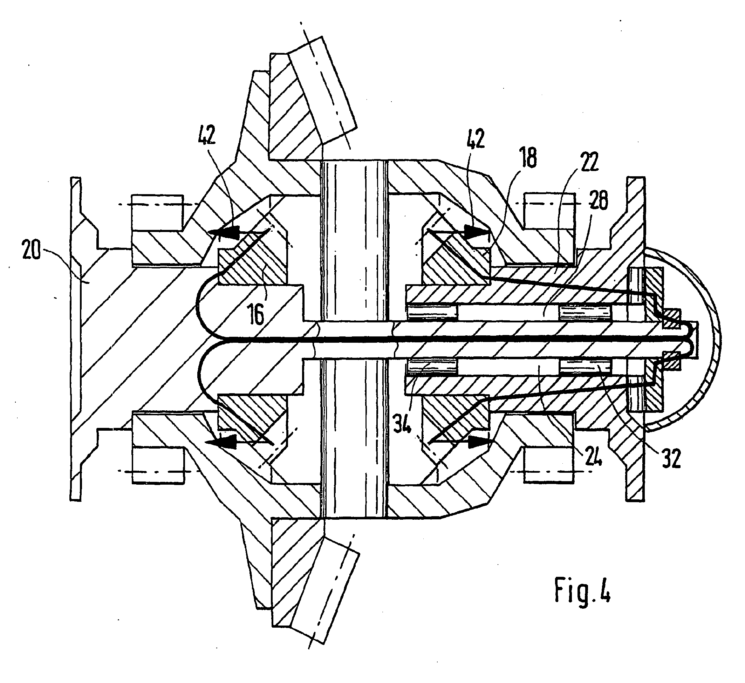

Wie in Fig. 4 dargestellt, wird der aufgrund der kegligen Verzahnung der Ausgleichsräder 12, 14 mit den Achswellenrädern 16 und 18 entstehende Axialkraftfluss 42 mit Hilfe der Zugstange 24 geschlossen, so dass eine zusätzliche axiale Abstützung der Achswellenkegelräder 16, 18 nicht erforderlich ist. Dadurch, dass die beiden Gelenkflansche 20, 22 über die Zugstange 24 miteinander verbunden sind, wird ihre radiale Lagerung verbessert. Mögliche Kippbewegungen der Gelenkflansche 20, 22 werden durch die beiden in der zylindrischen Öffnung 28 des zweiten Gelenkflansches 22 vorgesehenen Radiallager 32, 34 unterbunden.

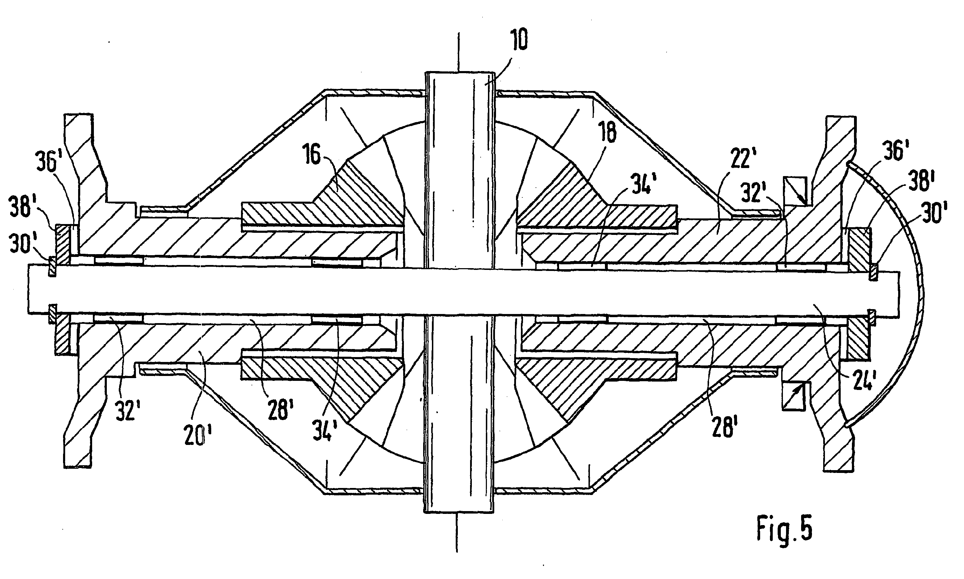

Die in Fig. 5 dargestellte zweite Ausführungsform unterscheidet sich gegenüber dem ersten Ausführungsbeispiel dadurch, dass beide Gelenkflansche 20' und 22' gleichartig ausgebildet und mit jeweils einer zylindrischen Öffnung 28' versehen sind, durch die eine separat ausgebildete Zugstange 24' hindurchgeführt ist. Die beiden Gelenkflansche 20' und 22' sind wiederum über jeweils zwei Radiallager 32' und 34' sowie durch jeweils am Ende der beiden Gelenkflansche 20' und 22' angeordnete Axiallager 36' auf der Zugstange 24' drehbar gelagert. Die beiden Axiallager 36' werden wiederum durch jeweils eine Anlaufscheibe 38' axial abgestützt, wobei die beiden Anlaufscheiben 38' über das Sicherungselement 30' axial abgestützt sind. Auch mit dieser zweiten Ausführungsform eines Achsdifferentials werden die im ersten Ausführungsbeispiel beschriebenen vorteilhaften Wirkungen erzielt.

## Patentansprüche

1. Differential für den Achsantrieb eines Kraftfahrzeuges, mit einem ein Antriebsrad (2) tragenden und in einem Getriebegehäuse gelagerten Ausgleichsgehäuse (4), in welchem ein Ausgleichsräder (14) tragender Achsbolzen (10) gelagert ist, wobei die Ausgleichsräder (14) mit Achsantriebswellen verbundenen Achswellenrädern (16, 11) kämmen und dass diese Räder als Kegelräder ausgebildet sind,
**dadurch gekennzeichnet, dass**
- ein ein erstes Achswellenrad (16) tragender erster Gelenkflansch (20) über eine Zugstange (24) mit einem ein zweites Achswellenrad (18) tragenden zweiten Gelenkflansch (22) verbunden ist, wobei
- die Zugstange (24) durch eine im Achsbolzen (10) angeordnete Öffnung (26) hindurchgeführt ist, und wobei
- der zweite Gelenkflansch (22) über Radiallager (32, 34) auf der Zugstange (24) drehbar gelagert ist und sowohl der erste Gelenkflansch (20) als auch der zweite Gelenkflansch (22) im Ausgleichgehäuse (4) derart angeordnet sind, dass Kippbewegungen der Gelenkflansche verhindert werden.

2. Differential nach Anspruch 1, **dadurch gekennzeichnet, dass** ein Ende der Zustange (24) durch den zweiten mit einer zylindrischen Öffnung (28) versehenen Gelenkflansch (22) hindurchgeführt und axial gesichert ist.

3. Differential nach einem der vorhergehenden Ansprüche, **dadurch gekennzeichnet, dass** zwischen dem Ende des zweiten Gelenkflansches (22) und einer am Ende der Zugstange (24) axial gesicherten Scheibe (38) ein Axiallager (36) angeordnet ist.

4. Differential nach Anspruch 1, **dadurch gekennzeichent, dass** beide Gelenkflansche (20, 22) eine zylindrische Öffnung (28') aufweisen, durch die die Zugstange (24') hindurchgeführt ist, wobei zur Aufnahme der durch die Achswellenräder (16, 18) erzeugten Axialkräfte jeweils am Ende der Gelenkflansche (20', 22') auf der Zugstange (24') ein Sicherungselement (30') angeordnet ist.

## Claims

1. Differential for the axle drive of a motor vehicle, having a differential casing (4) which supports a drive wheel (2) and is mounted in a transmission housing and in which is mounted an axle bolt (10) which supports differential wheels (14), with the differential wheels (14) meshing with axle shaft wheels (16, 18) which are connected to axle drive shafts, and with said wheels being embodied as bevel wheels,
**characterized in that**
- a first joint flange (20) which supports a first axle shaft wheel (16) is connected by means of a tie rod (24) to a second joint flange (22) which supports a second axle shaft wheel (18), with
- the tie rod (24) being guided through an opening (26) which is arranged in the axle bolt (10), and with
- the second joint flange (22) being rotatably mounted on the tie rod (24) by means of radial bearings (32, 34) and both the first joint flange (20) and also the second joint flange (22) being arranged in the differential casing (4) in such a way as to prevent tilting movements of the joint flanges.

2. Differential according to Claim 1, **characterized in that** one end of the tie rod (24) is guided through the second joint flange (22), which is provided with a cylindrical opening (28), and is axially secured.

3. Differential according to one of the preceding claims, **characterized in that** an axial bearing (36) is arranged between the end of the second joint flange (22) and a disc (38) which is axially secured on the end of the tie rod (24).

4. Differential according to Claim 1, **characterized in that** both joint flanges (20, 22) have a cylindrical opening (28') through which the tie rod (24') is guided, with a securing element (30') being arranged on the tie rod (24') in each case at the end of the joint flanges (20', 22') in order to absorb the axial forces generated by the axle shaft wheels (16, 18).

## Revendications

1. Différentiel pour l'entraînement des essieux d'un véhicule automobile, comprenant un boîtier de différentiel (4) supportant un pignon d'entraînement (2) et logé dans un carter d'engrenage, dans lequel est logé un goujon d'essieu (10) supportant des pignons de différentiel (14), les pignons de différentiel (14) s'engrenant avec des pignons d'arbre d'essieu (16, 18) reliés avec les arbres d'entraînement d'essieu et ces pignons étant réalisés sous la forme de pignons coniques, **caractérisé en ce que**
- une première bride articulée (20) supportant un premier pignon d'arbre d'essieu (16) est reliée par le biais d'une barre de traction (24) avec une deuxième bride articulée (22) supportant un deuxième pignon d'arbre d'essieu (18),
- la barre de traction (24) passant à travers une ouverture (26) disposée dans le goujon d'essieu (10) et
- la deuxième bride articulée (22) étant montée sur la barre de traction (24) par le biais de paliers radiaux (32, 34) de manière à pouvoir tourner et à la fois la première bride articulée (20) et la deuxième bride articulée (22) sont disposées dans le boîtier de différentiel (4) de telle sorte que les mouvements de basculement des brides articulées sont empêchés.

2. Différentiel selon la revendication 1, **caractérisé en ce qu'**une extrémité de la barre de traction (24) passe à travers la deuxième bride articulée (22) munie d'une ouverture cylindrique (28) et est bloquée dans le sens axial.

3. Différentiel selon l'une des revendications précédentes, **caractérisé en ce qu'**un palier axial (36) est disposé entre l'extrémité de la deuxième bride articulée (22) et un disque (38) bloqué dans le sens axial à l'extrémité de la barre de traction (24).

4. Différentiel selon la revendication 1, **caractérisé en ce que** les deux brides articulées (20, 22) présentent une ouverture cylindrique (28') à travers laquelle passe la barre de traction (24'), un élément de blocage (30') étant monté sur la barre de traction (24') à chaque fois à l'extrémité des brides articulées (20', 22') pour absorber les forces axiales produites par les pignons d'arbre d'essieu (16, 18).
